# EUROPEAN PATENT APPLICATION

(11) **EP 4 184 381 A1**
(43) Date of publication of application: **24.05.2023**
(21) Application number: 22209064.9
(22) Date of filing: 23.11.2022
(51) Int. Cl.: G06K 7/10, G06K 7/14

(54) **METHOD AND SYSTEM FOR SETTING DYNAMIC IMAGE THRESHOLD FOR TWO-DIMENSIONAL IDENTIFICATION CODE DETECTION**

(30) Priority: 23.11.2021 KR 20210161958; 28.12.2021 KR 20210189341
(71) Applicant: Virnect Inc., Seoul 04379 (KR)
(72) Inventor: KIM, Ki Young, 04379 Seoul (KR); KIM, Yeon Jo, 06949 Seoul (KR)
(74) Representative: BCKIP Part mbB

(57) **Abstract**

A method of setting a dynamic image threshold for two-dimensional identification code detection by a threshold setting application 111 executed by at least one processor of a terminal 100, comprises: acquiring an identification code image I obtained by photographing a two-dimensional identification code; converting the acquired identification code image I into a binarized image BI; detecting a two-dimensional identification code in the converted binarized image BI; and providing a predetermined application service based on the detected two-dimensional identification code. The converting of the identification code image I into a binarized image BI includes: dividing the identification code image I into a plurality of regions; calculating a binarization reference threshold BT for each of the plurality of divided regions; performing binary thresholding on each of the plurality of divided regions based on the calculated binarization reference threshold BT; generating a plurality of binarized divided images BDI based on the performed binary thresholding; and generating the binarized image BI by combining the plurality of generated binarized divided images BDI.

## Description

### CROSS-REFERENCE TO RELATED APPLICATIONS

This Application claims the benefit of Korean Patent Provisional Application No. 10-2021-0161958 filed on November 23, 2021 and Korean Patent Application No. 10-2021-0189341, filed on December 28, 2021 in the Korean Intellectual Property Office.

### TECHNICAL FIELD

The present disclosure relates to a method and system for setting a dynamic image threshold for dimensional identification code detection. More particularly, the present disclosure relates to a method and system for dynamically determining a binarization reference threshold for detecting a two-dimensional identification code based on a brightness value in an image.

### BACKGROUND

Two-dimensional identification codes such as QR (Quick Response) codes, Aztec codes, and Quickmarks were developed to expand the amount of information compared to existing one-dimensional identification codes and to minimize the decrease in recognition rate due to information damage.

These two-dimensional identification codes can contain 30 times to 700 times or more information than the existing EAN (European Article Number)/UPC (Universal Product Code) barcodes.

As such, the two-dimensional identification code can collect a lot of information in one place, so that the two-dimensional identification code is widely used in logistics, payment, authentication, advertisement, and the like. For example, the two-dimensional identification code is used throughout industries such as automobile parts, food containers, security areas, and products sold in shopping malls.

The two-dimensional identification code is implemented by arranging various fixed patterns, such as a position marker and an alignment marker, on a plane (two dimensions) according to predetermined rules.

In general, the two-dimensional identification code is implemented in such a manner that black patterns and white patterns are formed in a geometric structure.

Conventionally, in a method of recognizing a two-dimensional identification code, stored information is acquired after detecting the two-dimensional identification code through a two-dimensional identification code recognition application installed in a mobile device or a separate scanner, and the image of the detected two-dimensional identification code is identified and recognized through positioning, segmentation and decoding methods.

In this case, in order to efficiently recognize the image of the two-dimensional identification code, a process of binarizing all pixels of the corresponding identification code image to white or black (binary thresholding) is performed.

That is, the two-dimensional identification code is detected and read by converting the corresponding identification code image so that it has only bits of 0 and 1 which a computer can recognize, and finding the location of the two-dimensional identification code in the image based thereon.

At this time, it is a very important process to determine a brightness threshold, which is a reference point for classifying all pixels in the image as white or black, as described above.

However, depending on the change of environmental factors (e.g., lighting conditions, etc.) in which the image is taken, the brightness in the image may change dynamically or a noise may occur, which makes it difficult to set a fixed brightness threshold for the image.

### SUMMARY

In view of the above, the present disclosure provides a method and system for setting a dynamic image threshold for two-dimensional identification code detection, which dynamically determines a binarization reference threshold for the two-dimensional identification code detection based on a brightness value in an image

In this case, the present disclosure provides a method and system for setting a dynamic image threshold which detects a two-dimensional identification code in the image by calculating a plurality of the dynamically determined binarization reference thresholds (that is, adaptive thresholds), and using the calculated adaptive thresholds.

However, the technical problems to be achieved by the present disclosure and embodiments of the present disclosure are not limited to the technical problems described above, and other technical problems may exist.

A method of setting a dynamic image threshold for two-dimensional identification code detection according to one embodiment of the present disclosure is a method of setting a dynamic image threshold for two-dimensional identification code detection by a threshold setting application executed by at least one processor of a terminal, which comprises: acquiring an identification code image obtained by photographing a two-dimensional identification code; converting the acquired identification code image into a binarized image; detecting a two-dimensional identification code in the converted binarized image; and providing a predetermined application service based on the detected two-dimensional identification code, wherein the converting of the identification code image into a binarized image includes dividing the identification code image into a plurality of regions, calculating a binarization reference threshold for each of the plurality of divided regions, generating a plurality of binarized divided images by performing binary thresholding on each of the plurality of divided regions based on the calculated binarization reference threshold, and generating the binarized image by combining the plurality of generated binarized divided images.

In this case, the binarized image is an image obtained by performing binary thresholding which converts pixels brighter than the binarization reference threshold value to white among a plurality of pixels included in the identification code image and converts the remaining pixels to black.

In addition, the calculating of a binarization reference threshold for each of the plurality of divided regions includes calculating an average brightness value of pixels included in a first region within the plurality of divided regions, and determining the calculated average brightness value as the binarization reference threshold for the first region.

Further, the detecting of a two-dimensional identification code in the converted binarized image includes determining whether a predetermined fixed pattern exists in the binarized image, and the converting of the acquired identification code image into a binarized image includes calculating an additional reference threshold for each of the plurality of divided regions based on the binarization reference threshold for each of the plurality of divided regions when the fixed pattern does not exist in the binarized image.

Furthermore, the additional reference threshold is at least one binarization reference threshold additionally calculated for the first region within the plurality of divided regions in addition to the binarization reference threshold for the first region, and the additional reference threshold has a threshold value increased or decreased by a predetermined value based on the binarization reference threshold for the first region within the plurality of divided regions.

In addition, the converting of the acquired identification code image into a binarized image further includes performing binary thresholding on each of the plurality of divided regions based on the calculated additional reference threshold, generating a plurality of additional binarized divided images based on the performed binary thresholding, and generating a plurality of estimated binarized images by combining the plurality of generated additional binarized divided images and the plurality of generated binarized divided images according to a predetermined method.

Further, the detecting of a two-dimensional identification code in the converted binarized image further includes determining whether the generated plurality of estimated binarized images include the predetermined fixed pattern; and detecting the two-dimensional identification code based on the estimated binarized image including the fixed pattern.

Meanwhile, a method of setting a dynamic image threshold for two-dimensional identification code detection according to one embodiment of the present disclosure is a method of setting a dynamic image threshold for two-dimensional identification code detection by a threshold setting application executed by at least one processor of a terminal, which comprises: acquiring an identification code image obtained by photographing a two-dimensional identification code; converting the acquired identification code image into a binarized image; detecting a two-dimensional identification code in the converted binarized image; and providing a predetermined application service based on the detected two-dimensional identification code, wherein the converting of the identification code image into a binarized image includes dividing the identification code image into a plurality of regions, calculating an average brightness value for each of the plurality of divided regions, calculating a deviation between the plurality of calculated average brightness values, determining whether average brightness values for the plurality of divided regions are more included in a first brightness section or a second brightness section, when the calculated deviation is equal to or greater than a predetermined criterion, determining different binarization reference thresholds and application priority depending on the determination result, performing binary thresholding on the identification code image based on the determined binarization reference threshold and application priority, and generating the binarized image based on the performed binary thresholding.

In this case, the generating of the binarized image includes applying the binarization reference threshold to the binary thresholding of the identification code image according to the application sequence, and converting a pixel brighter than the applied binarization reference threshold among a plurality of pixels included in the identification code image to white, and converting the remaining pixels to black.

In addition, in a system for setting a dynamic image threshold for two-dimensional identification code detection according to one embodiment of the present disclosure, the system comprises: at least one display for outputting a two-dimensional identification code; at least one memory; at least one processor; and at least one application stored in the memory and executed by the processor to set a dynamic image threshold for two-dimensional identification code detection, wherein the at least one application operates to: acquire an identification code image obtained by photographing a two-dimensional identification code; convert the acquired identification code image into a binarized image; detect a two-dimensional identification code in the converted binarized image; and provide a predetermined application service based on the detected two-dimensional identification code; divide the identification code image into a plurality of regions; calculate a binarization reference threshold for each of the plurality of divided regions; perform binary thresholding on each of the plurality of divided regions based on the calculated binarization reference threshold; generate a plurality of binarized divided images based on the performed binary thresholding; and generate the binarized image by combining the plurality of generated binarized divided images.

In the method and system for setting a dynamic image threshold for two-dimensional identification code detection according to the embodiment of the present disclosure, by dynamically determining the binarization reference threshold for two-dimensional identification code detection based on a brightness value in the image, it is possible to determine the reference threshold that supports binary thresholding for accurately classifying the two-dimensional identification code regardless of whether the brightness in the image changes dynamically or a noise (e.g., local brightness, etc.) occurs depending on changes in environmental factors (e.g., lighting conditions, etc.).

Further, in the method and system for setting a dynamic image threshold for two-dimensional identification code detection according to the embodiment of the present disclosure, by calculating a plurality of dynamically determined binarization reference thresholds (i.e., adaptive thresholds), it is possible to acquire binarized images diversified based on the plurality of adaptive thresholds, and by performing the two-dimensional identification code detection based on the binarized image having the highest detection rate among them, the detection accuracy and performance of the two-dimensional identification code can be improved even when there is noise that prevents the detection of the two-dimensional identification code, such as a situation that the local brightness difference in the image is significant.

In addition, the method and system for setting a dynamic image threshold for two-dimensional identification code detection according to the embodiment of the present disclosure, by assigning priority to the plurality of calculated adaptive thresholds, and sequentially performing the threshold application according to the assigned priority, it is possible to detect a two-dimensional identification code in the image according to the systematic and rational process based on the plurality of adaptive thresholds, which improves the accuracy and reliability of the detection.

However, the effects obtainable in the present disclosure are not limited to the above-mentioned effects, and other effects not mentioned may be clearly understood from the following description.

### BRIEF DESCRIPTION OF THE DRAWINGS

FIG. 1 is a conceptual diagram of a system for setting a dynamic image threshold for two-dimensional identification code detection according to one embodiment of the present disclosure.
FIG. 2 is an internal block diagram of a terminal according to one embodiment of the present disclosure.
FIG. 3 shows examples of a binary thresholding error occurred in a conventional two-dimensional identification code detection process.
FIG. 4 is a flowchart illustrating a method of setting a dynamic image threshold for two-dimensional identification code detection according to one embodiment of the present disclosure.
FIG. 5 is a flowchart for explaining a method for converting an identification code image into a binarized image according to one embodiment of the present disclosure.
FIG. 6 is a conceptual diagram for explaining the method for converting an identification code image into a binarized image according to one embodiment of the present disclosure.
FIG. 7 is a flowchart for explaining a method of setting a dynamic image threshold for two-dimensional identification code detection according to another embodiment of the present disclosure.
FIG. 8 is an exemplary diagram for explaining a method for calculating a deviation based on an average brightness value for each of a plurality of divided regions according to another embodiment of the present disclosure.

### DETAILED DESCRIPTION

The present disclosure may be variously modified and may have various embodiments, and specific embodiments will be illustrated in the drawings and described Specifically in the detailed description. Effects and features of the present disclosure, and a method for achieving them, will become apparent with reference to the embodiments described below Specifically in conjunction with the drawings. However, the present disclosure is not limited to the embodiments disclosed below and may be implemented in various forms. In the following embodiments, terms such as first, second, and the like are used for the purpose of distinguishing one component from another, not in a limiting sense. In addition, the singular expression includes the plural expression unless clearly expressed otherwise. Further, terms such as "comprise", "include" and "have" mean that the features or components described in the specification are present, and do not preclude the possibility that one or more other features or components are added. Furthermore, in the drawings, the size of components may be exaggerated or reduced for convenience of explanation. For example, since the sizes and thicknesses of each component shown in the drawings are arbitrarily shown for convenience of explanation, the present disclosure is not necessarily limited to those illustrated.

Hereinafter, embodiments of the present disclosure will be described Specifically with reference to the accompanying drawings, and in the following description with reference to the drawings, the same or corresponding components are given the same reference numerals, and the redundant description thereof will be omitted..

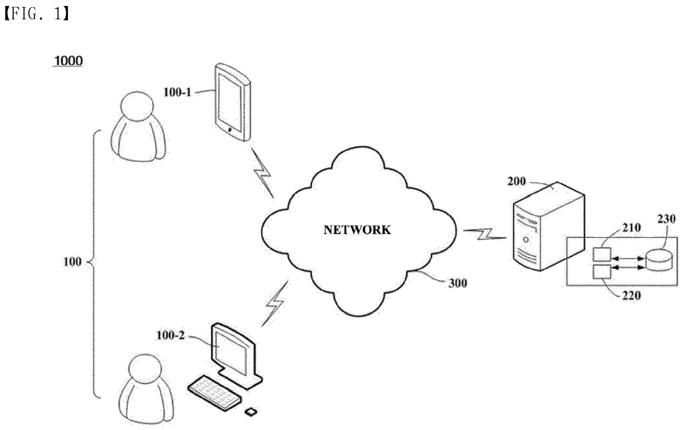

FIG. 1 is a conceptual diagram of a system for setting a dynamic image threshold for detecting a two-dimensional identification code according to one embodiment of the present disclosure.

Referring to FIG. 1, a system for setting a dynamic image threshold for two-dimensional identification code detection (hereinafter, referred to as dynamic image threshold setting system) 1000 according to one embodiment of the present disclosure may provide a dynamic image threshold setting service that dynamically determines a binary reference threshold for two-dimensional identification code detection based on a brightness value in an image.

In one embodiment, the dynamic image threshold setting system 1000 that provides the above dynamic image threshold setting service may include a terminal 100, a database server 200, and a network 300.

In this case, the terminal 100 and the database server 200 may be connected through the network 300.

Here, the network 300 according to the embodiment means a connection structure in which information exchange is possible between nodes such as the terminal 100 and/or the database server 200, and examples of such network 300 include a 3rd generation partnership project (3GPP) network, a long term evolution (LTE) network, a world interoperability for microwave access (WIMAX) network, the Internet, a local area network (LAN), a wireless local area network (Wireless LAN), a wide area network (WAN), a personal area network (PAN), a Bluetooth network, a satellite broadcasting network, an analog broadcasting network, a digital multimedia broadcasting (DMB) network, and the like, but are not limited to the above.

Hereinafter, the terminal 100 and the database server 200 implementing the dynamic image threshold setting system 1000 will be described Specifically with reference to the accompanying drawings.

### - Terminal 100

The terminal 100 according to one embodiment of the present disclosure may be a computing device in which a threshold setting application (hereinafter, referred to "application") for providing a dynamic image threshold setting service is installed.

Specifically, in terms of hardware, the terminal 100 may include a mobile type computing device 100-1 and/or a desktop type computing device 100-2 in which the application is installed.

Here, the mobile type computing device 100-1 may be a mobile device such as a smartphone or a tablet PC in which the application is installed.

For example, the mobile type computing device 100-1 may include a smartphone, a mobile phone, a digital broadcasting device, a personal digital assistant (PDA), a portable multimedia player (PMP), a tablet PC, and the like.

In addition, the desktop type computing device 100-2 may include a device in which a program for executing the dynamic image threshold setting service through wired/wireless communication, e.g., a personal computer such as a fixed desktop PC, a laptop computer, and an ultrabook in which the application is installed..

Further, according to one embodiment, the terminal 100 may further include a server computing device that provides a dynamic image threshold setting service environment.

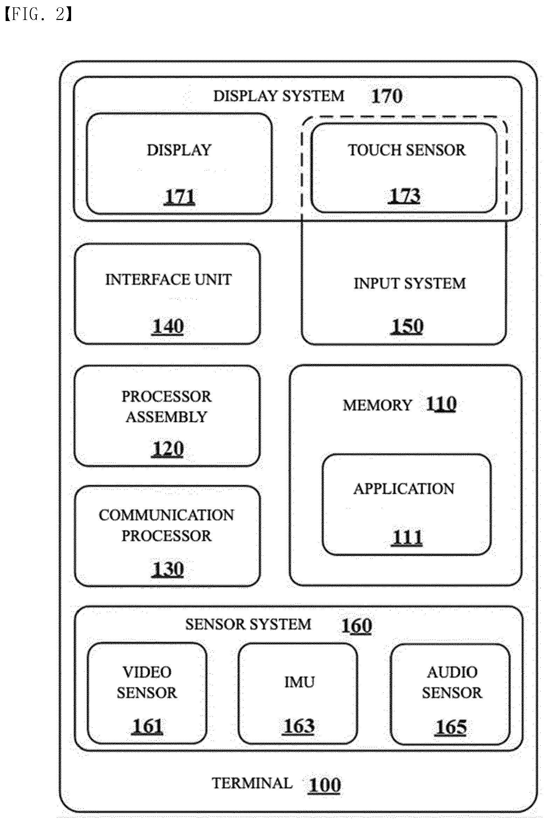

FIG. 2 is an internal block diagram of the terminal 100 according to one embodiment of the present disclosure.

Meanwhile, referring to FIG. 2, from a functional point of view, the terminal 100 may include a memory 110, a processor assembly 120, a communication processor 130, an interface unit 140, an input system 150, a sensor system 160, and a display system 170. Such components may be configured to be included in a housing of the terminal 100.

Specifically, the application 111 may stored in the memory 110, and the application 111 may store one or more of various application programs, data, and instructions for providing a dynamic image threshold setting service environment.

That is, the memory 110 may store instructions and data used to create a dynamic image threshold setting service environment.

In addition, the memory 110 may include a program area and a data area.

Here, the program area according to the embodiment may be linked between an operating system (OS) and functional elements for booting the terminal 100, and the data area may store data generated by the use of the terminal 100.

Further, the memory 110 may include one or more non-transitory computer-readable storage mediums and a transitory computer-readable storage medium.

For example, the memory 110 may be a variety of storage devices such as ROM, EPROM, flash drive, hard drive, and the like, and may include a web storage that performs a storage function of the memory 110 on the Internet.

The processor assembly 120 may include at least one processor capable of executing instructions of the application 111 stored in the memory 110 to perform various tasks for creating a dynamic image threshold setting service environment.

In one embodiment, the processor assembly 120 may control the overall operation of the components through the application 111 in the memory 110 to provide a dynamic image threshold setting service.

The processor assembly 120 may be a system-on-chip (SOC) suitable for the terminal 100 including a central processing unit (CPU) and/or a graphics processing unit (GPU), may execute an operating system (OS) and/or an application program stored in the memory 110, and may control each component mounted on the terminal 100.

In addition, the processor assembly 120 may internally communicate with each component through a system bus, and may include one or more predetermined bus structures including a local bus.

Further, the processor assembly 120 may be implemented to include at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and electrical units for performing other functions.

The communication processor 130 may include one or more devices for communicating with an external device. The communication processor 130 may communicate through a wireless network.

Specifically, the communication processor 130 may communicate with a computing device storing therein a content source for implementing a dynamic image threshold setting service environment, and may communicate with various user input components such as a controller for receiving user input..

In one embodiment, the communication processor 130 may transmit and receive various data related to the dynamic image threshold setting service to and from another terminal 100 and/or an external server.

The communication processor 130 may wirelessly transmit and receive data to and from at least one of a base station, an external terminal 100, and an arbitrary server through a mobile communication network constructed through a communication device capable of performing technical standards or communication methods (e.g., Long Term Evolution (LTE), Long Term Evolution-Advanced (LTE-A), 5G New Radio (NR), WIFI) for mobile communication, local area communication, or the like.

The sensor system 160 may include various sensors such as an image sensor 161, a position sensor (IMU) 163, an audio sensor 165, a distance sensor, a proximity sensor, and a contact sensor.

Here, the image sensor 161 may capture an image and/or a video image for the physical space around the terminal 100.

In one embodiment, the image sensor 161 may capture and obtain an image (e.g., an identification code image, etc.) related to a dynamic image threshold setting service.

In addition, the image sensor 161 may be arranged at a front side or/and a rear side of the terminal 100 to obtain an image by photographing the direction of the arranged side, and may photograph a physical space through a camera disposed toward the outside of the terminal 100.

The image sensor 161 may include an image sensor device and an image processing module. Specifically, the image sensor 161 may process a still image or a video image obtained by the image sensor device (e.g., CMOS or CCD).

In addition, the image sensor 161 may process the still image or the video image obtained through the image sensor device using the image processing module to extract necessary information, and transmit the extracted information to the processor.

The image sensor 161 may be a camera assembly including at least one camera. The camera assembly may include a general camera that captures a visible light band, and may further include a special camera such as an infrared camera, a stereo camera, or the like.

Further, depending on embodiments, the image sensor 161 as described above may be operated by being included in the terminal 100, or may be included in an external device (e.g., an external server, etc.) and operated through interworking with the communication processor 130 and/or the interface unit 140 described above.

The position sensor (IMU) 163 may sense at least one of a motion and an acceleration of the terminal 100. For example, The position sensor (IMU) 163 may be implemented through a combination of various position sensors such as an accelerometer, a gyroscope, and a magnetometer.

In addition, the position sensor (IMU) 163 may recognize spatial information on the physical space around the terminal 100 by interworking with the position communication processor 130 such as GPS of the communication processor 130.

The audio sensor 165 may recognize a sound around the terminal 100.

Specifically, the audio sensor 165 may include a microphone capable of detecting a voice input of a user using the terminal 100.

In one embodiment, the audio sensor 165 may receive voice data required for a dynamic image threshold setting service from the user.

The interface unit 140 may communicatively connect the terminal 100 to one or more other devices. Specifically, the interface unit 140 may include a wired and/or wireless communication device compatible with one or more different communication protocols.

Through the interface unit 140, the terminal 100 may be connected to various input/output devices.

For example, the interface unit 140 may be connected to an audio output device such as a headset or a speaker to output audio.

Although it has been described that the audio output device is connected to the terminal 100 through the interface unit 140 as an example, the audio output device may be installed in the terminal 100 according to another embodiment.

In addition, for example, the interface unit 140 may be connected to an input device such as a keyboard and/or a mouse to obtain a user input.

Although it has been described that the keyboard and/or the mouse are connected to the terminal 100 through the interface unit 140, the keyboard and/or the mouse may be installed in the terminal 100 according to another embodiment.

The interface unit 140 may include at least one of a wired/wireless headset port, an external charger port, a wired/wireless data port, a memory card port, a port for connection with a device equipped with an identification module, an audio I/O (input/output) port, a video I/O (input/output) port, an earphone port, a power amplifier, an RF circuit, a transceiver, and other communication circuits.

The input system 150 may detect a user's input (e.g., a gesture, a voice command, actuation of a button, or other type of input) related to the dynamic image threshold setting service.

Specifically, the input system 150 may include an image sensor 161 for receiving an input of a button, a touch sensor and/or a user's motion input, and the like.

In addition, the input system 150 may be connected to an external controller through the interface unit 140 to receive a user's input.

The display system 170 may output various information related to the dynamic image threshold setting service as a graphic image.

In one embodiment, the display system 170 may display an identification code image, a binarized image, and/or various user interfaces.

The display 171 may include at least one of a liquid crystal display (LCD), a thin film transistor-liquid crystal display (TFT LCD), an organic light-emitting diode (OLED), and a flexible display, a three-dimensional display (3D display), an electronic ink display (e-ink display).

The above components may be disposed in the housing of the terminal 100, and the user interface may include a touch sensor 173 on the display 171 configured to receive a user touch input.

Specifically, the display system 170 may include a display 171 for outputting an image, and a touch sensor 173 for detecting a user's touch input.

For example, the display 171 may be implemented as a touch screen in which the display 171 is formed in a layer structure with the touch sensor 173 or is integrally formed therewith. The touch screen may function as a user input unit that provides an input interface between the terminal 100 and the user, and may provide an output interface between the terminal 100 and the user.

Meanwhile, the terminal 100 according to one embodiment of the present disclosure may perform various functional operations required for the dynamic image threshold setting service using at least one disclosed algorithm.

In one embodiment, the terminal 100 may perform various functional operations required for the dynamic image threshold setting service based on various algorithms for performing object detection and/or image segmentation.

In addition, according to one embodiment, the terminal 100 may further perform at least a part of functional operations performed by the database server 200 to be described later.

### - Database server 200

Meanwhile, the database server 200 according to one embodiment of the present disclosure may perform a series of processes for providing the dynamic image threshold setting service.

Specifically, in one embodiment, the database server 200 may provide the dynamic image threshold setting service by exchanging data necessary for driving the dynamic image threshold setting process in an external device such as the terminal 100 with the external device.

More specifically, in one embodiment, the database server 200 may provide an environment in which the application 111 can operate in an external device (the mobile type computing device 100-1 and/or the desktop type computing device 100-2 in one embodiment).

To this end, the database server 200 may include an application program, data, and/or instructions for operating the application 111, and may transmit and receive data based thereon to and from the external device.

In addition, in one embodiment, the database server 200 may acquire an identification code image obtained by photographing a two-dimensional identification code.

Further, in one embodiment, the database server 200 may convert the obtained identification code image into a binarized image.

In this case, the binarized image may refer to an image obtained by performing binary thresholding which converts all pixels brighter than a preset threshold to white and converts the remaining pixels to black.

Furthermore, in one embodiment, the database server 200 may detect a two-dimensional identification code in the converted binarized image.

In addition, in one embodiment, the database server 200 may provide the detected two-dimensional identification code information through various methods (e.g., display output and/or data communication, etc.).

Further, in one embodiment, the database server 200 may perform an application service based on the provided two-dimensional identification code information.

That is, the database server 200 may implement various application services including image-based two-dimensional identification code recognition and/or processing services based on the two-dimensional identification code.

In addition, in one embodiment, the database server 200 may perform a predetermined function operation required for the dynamic image threshold setting service using at least one disclosed algorithm.

In one embodiment, the database server 200 may perform various functional operations required for the dynamic image threshold setting service based on various algorithms for performing object detection and/or image segmentation, etc.

Specifically, in one embodiment. the database server 200 may read an algorithm driving program built to perform the functional operation such as described above from a memory module 230 and perform the corresponding functional operation according to the read algorithm driving program.

In this case, according to one embodiment, the algorithm may be directly included in the database server 200 or implemented in a device and/or a server separate from the database server 200 to perform a functional operation for the dynamic image threshold setting service.

In the following description, it will be described that the algorithm is implemented by being included in the database server 200, but is not limited thereto.

In addition, in one embodiment, the database server 200 may store and manage various application programs, instructions and/or data for implementing the dynamic image threshold setting service.

In one embodiment, the database server 200 may store and manage various algorithms required for setting at least one identification code image, divided image, binarization reference threshold, binarized divided image, binarized image, fixed pattern data, two-dimensional identification code information, and/or a dynamic image threshold.

Meanwhile, referring further to FIG. 1, in one embodiment, the database server 200 may be implemented as a computing device including at least one processor module 210, at least one communication module 220 for exchanging data with external devices, and at least one memory module 230 that stores various application programs, data, and/or instructions for providing the dynamic image threshold setting service.

In this case, the memory module 230 may store one or more of an operating system (OS), various application programs, data, and instructions for providing the dynamic image threshold setting service.

In addition, the memory module 230 may include a program area and a data area.

Here, the program area according to one embodiment may be linked between an operating system (OS) for booting the server and functional elements, and the data area may store data generated by the use of the server.

In one embodiment, the memory module 230 may be various storage devices such as ROM, RAM, EPROM, flash drive, hard drive, and the like, and may be a web storage that performs a storage function of the memory module 230 on the Internet.

In addition, the memory module 230 may be a recording medium that can be detachably detached to the server.

Meanwhile, the processor module 210 may control the overall operation of each unit described above to implement the dynamic image threshold setting service.

The processor module 210 may be a system-on-chip (SOC) suitable for the server including a central processing unit (CPU) and/or a graphics processing unit (GPU), and the like, may execute an operating system (OS) and/or an application program stored in the memory module 230, and may control each component mounted on the server.

In addition, the processor module 210 may internally communicate with each component through a system bus, and may include one or more predetermined bus structures including a local bus.

Further, the processor module 210 may be implemented using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and electrical units for performing other functions.

In the above description, it has been described that the database server 200 according to one embodiment of the present disclosure performs the functional operation as described above, but according to other embodiments, at least a part of the functional operation performed by the database server 200 may be performed by an external device (e.g., the terminal 100), or at least a part of the functional operation performed by the external device may be further performed by the database server 200.

### - Dynamic image threshold setting method for 2D identification code detection

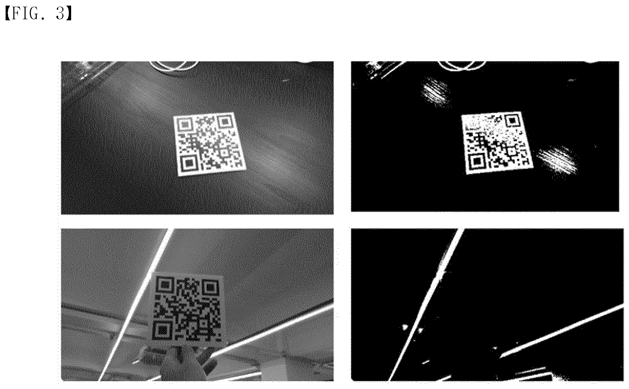

Hereinafter, a method of setting a dynamic image threshold for two-dimensional identification code detection by the application 111 executed by at least one processor of the terminal 100 according to one embodiment of the present disclosure will be described in detail with reference to FIGS. 3 to 6.

FIG. 3 shows examples of a binary thresholding error occurred in a conventional two-dimensional identification code detection process.

Referring to FIG. 3, in order to efficiently recognize an image-based two-dimensional identification code, a method of binarizing all pixels of the image into white or black and then finding the position of the two-dimensional identification code is conventionally used.

In this case, it is a very important process to determine a brightness threshold that is a reference point for distinguishing the white or black.

However, depending on changes in environmental factors (e.g., lighting conditions, etc.) in which an image is taken, the brightness in the image may be flexibly changed or a noise may be generated.

For this reason, the binarization reference threshold for accurately discriminating the two-dimensional identification code in the image may not be properly set.

In this case, the accuracy and performance of recognizing the two-dimensional identification code in the image may be degraded.

Accordingly, in the present disclosure, in order to prevent the above, the binary reference threshold for two-dimensional identification code detection is dynamically determined based on brightness values in the image.

Specifically, in one embodiment of the present disclosure, at least one processor of the terminal 100 may execute at least one application 111 stored in at least one memory 110 or may cause the at least one application 111 to operate in a background state.

Hereinafter, the at least one processor operating to execute the instruction of the application 111 to perform the method of providing the dynamic image threshold setting service described above will be briefly described as being performed by the application 111.

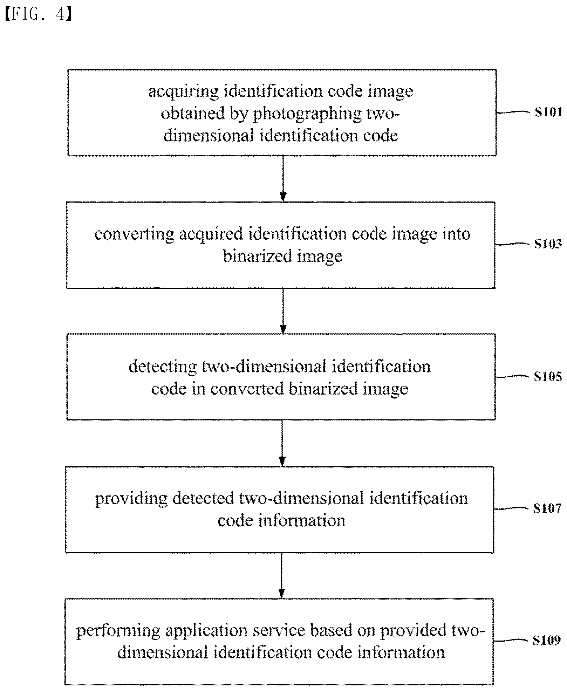

FIG. 4 is a flowchart illustrating a method of setting a dynamic image threshold for two-dimensional identification code detection according to one embodiment of the present disclosure.

Referring to FIG. 4, in one embodiment, the application 111 executed by at least one processor of the terminal 100 or operating in a background state may acquire an identification code image obtained by photographing a two-dimensional identification code (S101).

Here, the two-dimensional identification code according to one embodiment refers to an identification code that is implemented by arranging various fixed patterns such as a position marker and/or an alignment marker on a plane (two dimensions) according to predetermined rules.

In general, the two-dimensional identification code is implemented in such a manner that black patterns and white patterns are formed in a geometric structure.

In one embodiment, the two-dimensional identification code may be QR (Quick Response) code, Aztec code, and/or Quickmark.

Specifically, in one embodiment, the application 111 may acquire an identification code image obtained by photographing the two-dimensional identification code using the image sensor 161.

In addition, in one embodiment, the application 111 may convert the acquired identification code image into a binarized image (S103).

Here, the binarized image according to one embodiment may refer to an image obtained by performing binary thresholding which converts all pixels brighter than a preset threshold to white and converts the remaining pixels to black.

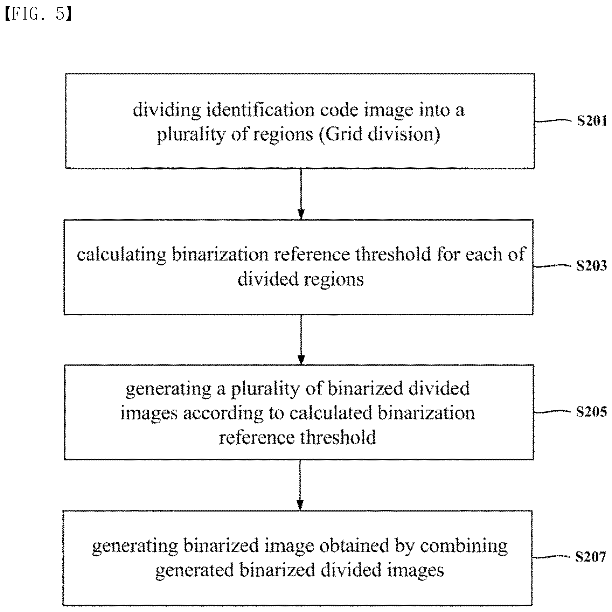

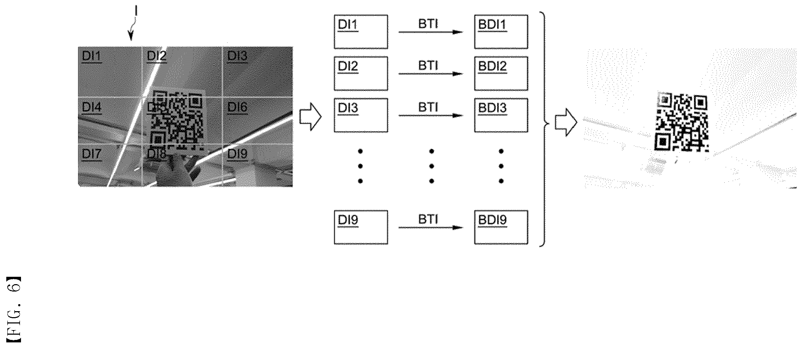

FIG. 5 is a flowchart for explaining a method for converting an identification code image into a binarized image according to one embodiment of the present disclosure. FIG. 6 is a conceptual diagram for explaining the method for converting an identification code image into a binarized image according to one embodiment of the present disclosure.

Specifically, referring to FIGS. 5 and 6, in one embodiment, the application 111 may 1) perform grid division on the identification code image I, to divide the identification code image I into a plurality of regions according to a predetermined criterion (S201).

For example, the application 111 may perform grid division on the identification code image I to divide the identification code image I into a plurality of regions of '4 rows and 3 columns (4 by 3)'.

Subsequently, the application 111 may minimize the problem of errors occurring in detecting the two-dimensional identification code in the identification code image I due to local brightness changes in the identification code image I by performing calculations for each of the divided regions.

At this time, according to one embodiment, the application 111 may convert the identification code image I into grayscale and proceed with the process to be described later.

In addition, in one embodiment, the application 111 may 2) calculate a binarization reference threshold BT for each of the plurality of divided regions (hereinafter, referred to as the plurality of regions) (S203).

Here, the binarization criterion threshold BT according to one embodiment may refer to a preset threshold value that is a criterion for performing the above-described binary thresholding.

Specifically, in one embodiment, the application 111 may calculate an average brightness value for each of the plurality of regions.

For example, the application 111 may calculate a first average brightness value by averaging brightness values of a plurality of pixels in the first region, and calculate an N-th average brightness value by averaging brightness values of a plurality of pixels in the N-th region in the same manner.

Further, the application 111 may set the average brightness value calculated for each region as the binarization reference threshold BT for the corresponding region as described above.

That is, in the example, the application 111 may set the binarization reference threshold BT for the first region as the first brightness average value, and in the same manner, may set the binarization reference threshold BT for the N-th region as the N-th average brightness value.

In this way, the application 111 may calculate a plurality of binarization reference thresholds BT set for each region.

Therefore, the application 111 may later acquire a diversified binarized image based on the plurality of binarization reference thresholds BT, and perform two-dimensional identification code detection based on the binarized image having the highest detection rate among the acquired binarization images.

Thus, the application 111 can improve the detection accuracy and performance of the two-dimensional identification code even when there is noise that interferes with the detection of the two-dimensional identification code, such as a situation in which the local brightness difference in the image is significant.

In addition, in one embodiment, the application 111 may 3) generate a plurality of binarized divided images BDI according to the calculated binarization reference threshold BT for each of the plurality of divided regions (S205).

Here, the binarized divided image (BDI) according to one embodiment may refer to an image obtained by performing binary thresholding on an image representing one divided region (hereinafter, divided image DI) using the binary reference threshold BT calculated for the corresponding divided region.

That is, in one embodiment, a first binary divided image BDI1 may refer to an image obtained by performing binary thresholding which converts all pixels brighter than a binary reference threshold BT calculated for the first divided image DI1 among the pixels in the first divided image DI1 into white and converts the remaining pixels to black.

Specifically, in one embodiment, the application 111 may independently binarize each of the plurality of divided regions using a binary reference threshold BT calculated for each of the divided regions.

Thus, the application 111 may acquire the divided images DI generated for each of the plurality of divided regions.

In addition, the application 111 may binarize each of the plurality of divided images DI based on the binarization reference threshold BT of each of the divided regions.

That is, the application 111 may perform binary thresholding, on each of the plurality of divided images DI, which converts pixels brighter than the binarization reference threshold BT of the corresponding divided image DI to white and converts the remaining pixels to black.

Thus, the application 111 may generate a plurality of divided images DI on which the binary thresholding has been performed, that is, a plurality of binarized divided images BDI.

In addition, in one embodiment, the application 111 may 4) generate the above-described binarized image BI by combining the plurality of binarized divided images BDI (S207).

Specifically, in one embodiment, the application 111 may arrange and recombine the plurality of binarized divided images BDI corresponding to the arrangement (position) of the respective divided regions in the corresponding identification code image I.

That is, in one embodiment, the application 111 may recombine the plurality of binarized divided images BDI generated for the respective divided regions in the identification code image I to correspond to the arrangement (position) of the respective divided regions in the identification code image I, thereby generating the binarized image BI.

Thus, the application 111 may convert the acquired identification code image I into the binarized image BI, as described above.

In this way, the application 111 may generate a binarized image BI for the identification code image I by combining a plurality of binarized divided images BDI based on the respective binarization reference thresholds BT for the divided regions in the corresponding identification code image I.

Accordingly, the application 111 can significantly reduce the effect of local brightness (e.g., local brightness due to light blur) in the identification code image I on binarization of the corresponding identification code image I.

Through this, the application 111 can improve the detection performance for the two-dimensional identification code in the identification code image I based on the corresponding threshold later.

Referring back to FIG. 4, in one embodiment, the application 111 may detect a two-dimensional identification code in the converted binarized image BI (S105).

Specifically, in one embodiment, based on the binarized image BI generated as described above, the application 111 may detect a two-dimensional identification code in the corresponding binarized image BI.

More specifically, in one embodiment, the application 111 may determine whether a predetermined fixed pattern exists in the binarized image BI.

Here, the fixed pattern according to one embodiment may refer to various patterns such as a position marker and/or an alignment marker preset according to a predetermined rule to implement a predetermined two-dimensional identification code.

Further, in one embodiment, the application 111 may detect a two-dimensional identification code from the binarized image BI when the predetermined fixed pattern exists in the binarized image BI.

On the other hand, in one embodiment, when there is no fixed pattern in the binarized image BI, the application 111 may set an additional reference threshold for each of the plurality of divided regions based on the binarization reference threshold BT for each of the plurality of divided regions.

Here, the additional reference threshold according to one embodiment may mean at least one additionally calculated binarization reference threshold BT in addition to the binarization reference threshold BT for one divided image DI.

In this case, the additional reference threshold may have a threshold increased or decreased by a predetermined brightness based on the binarization reference threshold BT for the one divided image DI.

In one embodiment, the additional reference threshold may include at least one additional increment threshold having a threshold value that increases by a predetermined brightness unit based on the binarization reference threshold BT for the one divided image DI, and at least one additional decrement threshold having a threshold value that decreases by a predetermined brightness unit based on the binarization reference threshold BT for the divided region.

In detail, in one embodiment, when no predetermined fixed pattern exists in the binarized image BI, the application 111 may set a plurality of additional reference thresholds for the respective divided regions.

Specifically, in one embodiment, the application 111 may calculate at least one additional increment threshold and at least one additional decrement threshold for each of the plurality divided regions.

In one embodiment, the application 111 may calculate a first additional increment threshold having a threshold value increased by a predetermined brightness based on the first binarization reference threshold BT of the first divided region and a first additional decrement threshold having a threshold value decreased by a predetermined brightness based on the first binarization reference threshold BT of the first divided region.

In addition, in one embodiment, the application 111 may generate a plurality of binarized divided additional images according to the plurality of calculated additional reference thresholds.

As one embodiment, the application 111 may generate a binarized divided additional image according to the first additional increment threshold of the first divided region and a binarized divided additional image according to the first additional decrement threshold of the first divided region.

In addition, in one embodiment, the application 111 may set the plurality of generated binarized divided additional images and the binarized divided image BDI generated as described above as an increment divided image DI for the corresponding divided region.

As one embodiment, the application 111 may set a first increment divided image DI including a plurality of first binarized divided additional images for the first divided region and the first binarized divided image BDI1 to match with the first divided region.

In addition, in one embodiment, the application 111 may generate an estimated binarized image BI obtained by combining the plurality of increment divided images (DI) set for the respective divided regions.

Specifically, the application 111 may generate a plurality of estimated binarized images BI according to all possible combinations of a plurality of images (binarized divided image BDI and binarized divided additional images in the embodiment) included in the increment divided image DI for each of the divided regions.

As one embodiment, the application 111 may generate a plurality of estimated binarized images BI by combining the plurality of increment divided images DI for each of the first to N-th divided regions according to all possible combinations between a plurality of first binarized divided additional images for the first divided region and the first binarized divided image BDI1 for the first divided region, a plurality of second binarized divided additional images for the second divided region and the second binarized divided image BDI2 for the second divided region, and a plurality of N-th binarized divided additional images for the N-th divided region and the N-th binarized divided image BDI for the N-th divided region.

Alternatively, the application 111 may group a plurality of images (binary divided image (BDI) and binarized divided additional images in the embodiment) included in the increment divided image DI for each of the divided regions for each threshold corresponding to each image (i.e., the above-described binarization reference threshold BT, additional increment threshold, or additional decrement threshold).

Further, the application 111 may generate a plurality of estimated binarized images BI according to all possible combinations between images grouped into the same group.

As one embodiment, the application 111 may generate an estimated binarized image BI by combining the first to N-th binarized divided images BDI for the first to N-th divided regions, may generate an estimated binarized image BI by combining binarized divided additional images according to the first to N-th additional increment thresholds for the first to N-th divided regions, and may generate an estimated binarized image BI by combining binarized divided additional images according to the first to N-th additional decrement thresholds for the first to N-th divided regions.

Further, in one embodiment, the application 111 may determine whether a fixed pattern exists for each of the plurality of estimated binarized images BI generated as described above.

In addition, in one embodiment, the application 111 may detect an estimated binarized image BI having the highest matching rate with the fixed pattern as a main estimated binarized image BI among at least one estimated binarized image BI for which it is determined that the fixed pattern exists as a result of the above determination.

Then, in one embodiment, the application 111 may detect a two-dimensional identification code in the corresponding image based on the detected main estimated binarized image BI.

That is, the application 111 may calculate a plurality of binarization reference thresholds BT based on the brightness value for the respective divided regions in the identification code image I, generate a plurality of binarized images BI according to the plurality of calculated binarization reference thresholds BT, and perform two-dimensional identification code detection using a binarized image BI having the highest matching rate with a preset fixed pattern among the plurality of generated binarized images BI.

Accordingly, the application 111 can adaptively determine a binarization reference threshold BT optimized for the above identification code image (i.e., a binarization reference threshold BT which supports binary thresholding that accurately discriminates the two-dimensional identification code in the above identification code image I) according to characteristics such as local brightness changes in the corresponding identification code image I.

Further, through the above, the application 111 can detect the two-dimensional identification code in the identification code image I based on the adaptively determined optimal binarization reference threshold BT, which improves the detection accuracy.

In addition, in one embodiment, the application 111 may provide the detected two-dimensional identification code information (S107).

Specifically, in one embodiment, the application 111 may recognize the detected two-dimensional identification code to obtain information stored in the two-dimensional identification code (e.g., a website address, virtual object and/or authentication information, etc.).

Further, in one embodiment, the application 111 may provide the obtained two-dimensional identification code information in various ways according to a predetermined method (e.g., display output, data communication and/or application service, etc.).

In addition, in one embodiment, the application 111 may perform an application service based on the provided two-dimensional identification code information (5109).

Further, in one embodiment, the application 111 may perform various application services that are executed based on the provided two-dimensional identification code information.

Specifically, in one embodiment, the application 111 may perform various application services based on the two-dimensional identification code information through interworking with another application operating on the terminal and/or an external application operating on an external computing device (e.g., another terminal and/or server, etc.).

As one embodiment, the application 111 may provide the two-dimensional identification code information to the another application and/or the external application.

In this case, the another application and/or the external application that have received the two-dimensional identification code information may perform a series of functions for various application services, including image-based two-dimensional identification code recognition and/or processing services (e.g., accessing an website address in the two-dimensional identification code information, displaying augmented virtual objects, or executing an authentication process).

Thus, the application 111 can perform various application services based on the two-dimensional identification code information through interworking with the another application and/or the external application.

Accordingly, the application 111 can support the implementation of various application services of higher quality based on the more accurately detected two-dimensional identification code.

### - Another method of setting dynamic image thresholds for two-dimensional identification code detection

Hereinafter, another method of setting a dynamic image threshold for two-dimensional identification code detection by the application 111 according to one embodiment of the present disclosure will be described in detail with reference to the accompanying drawings. In this case, the description overlapping the above description will be summarized or omitted.

Specifically, in one embodiment, the application 111 may acquire an identification code image I obtained by photographing a two-dimensional identification code.

In other words, in one embodiment, the two-dimensional identification code refers to an identification code implemented by arranging various fixed patterns, such as a position marker and an alignment marker, on a plane (two dimensions) according to predetermined rules.

In general, the two-dimensional identification code is implemented in such a manner that black patterns and white patterns are formed in a geometrical structure, and may be, for example, QR (Quick Response) code, Aztec code, and/or Quickmark.

Specifically, in one embodiment, the application 111 may acquire an identification code image I obtained by photographing the above two-dimensional identification code using an image sensor 161.

In addition, in one embodiment, the application 111 may convert the acquired identification code image I into a binarized image BI.

In other words, in one embodiment, the binarized image BI may be an image obtained by performing binary thresholding which converts pixels brighter than the preset threshold to white and converts the remaining pixels to black.

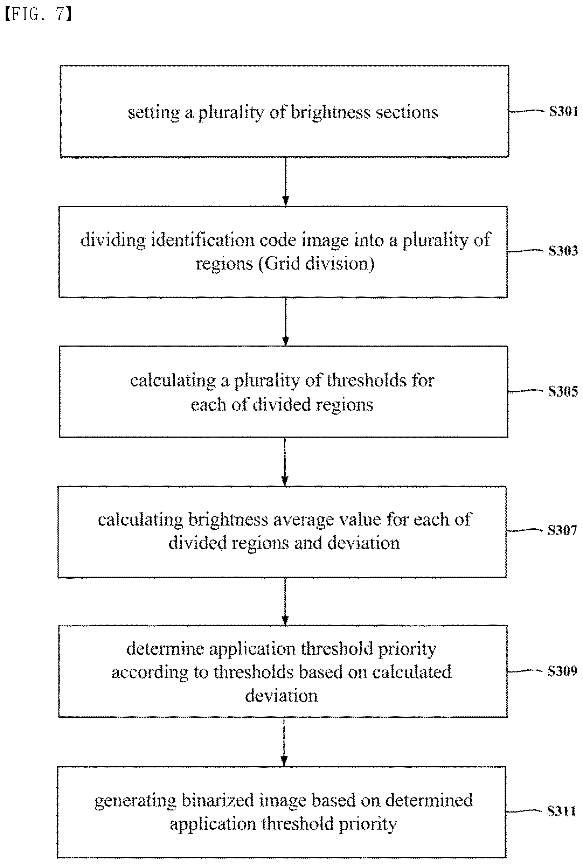

FIG. 7 is a flowchart for explaining a method of setting a dynamic image threshold for two-dimensional identification code detection according to another embodiment of the present disclosure.

Referring to FIG. 7, in one embodiment, the application 111 may 1) set a plurality of brightness sections according to a predetermined criterion (S301).

Specifically, the application 111 may divide the brightness range (e.g., 0-255) according to an image format into the first to N-th brightness sections according to the predetermined criterion.

In this case, the first to N-th brightness sections may have greater brightness values from the first brightness section to the N-th brightness section.

For example, the application 111 may set the first to N-th brightness sections in which the first brightness section is the lowest brightness section, the second brightness section is the intermediate brightness section, and the third brightness section is the highest brightness section according to the predetermined criterion.

In addition, the application 111 may 2) perform grid division on the identification code image I into a plurality of regions according to a predetermined criterion (S303).

For example, the application 111 may divide the identification code image I into a plurality of regions of 'four rows and three columns (4 by 3)' by performing grid division on the identification code image I.

In this case, according to one embodiment, the application 111 may convert the identification code image I into grayscale and proceed with the process described below.

In addition, in one embodiment, the application 111 may 3) calculate a high threshold, an intermediate threshold, and a low threshold for each of the plurality of divided regions (S305).

Specifically, in one embodiment, the application 111 may calculate a first brightness average value for the first divided region.

Further, the application 111 may set the calculated first brightness average value as a first intermediate threshold value for the first divided region.

In addition, in one embodiment, the application 111 may set the high threshold or the low threshold for the first divided region by adding/subtracting a predetermined brightness value to/from the first brightness average value.

Specifically, the application 111 may set a first high threshold having a threshold value increased by the predetermined brightness from the first brightness average value.

In addition, in one embodiment, the application 111 may set a first low threshold value having a threshold value decreased by the predetermined brightness from the first brightness average value.

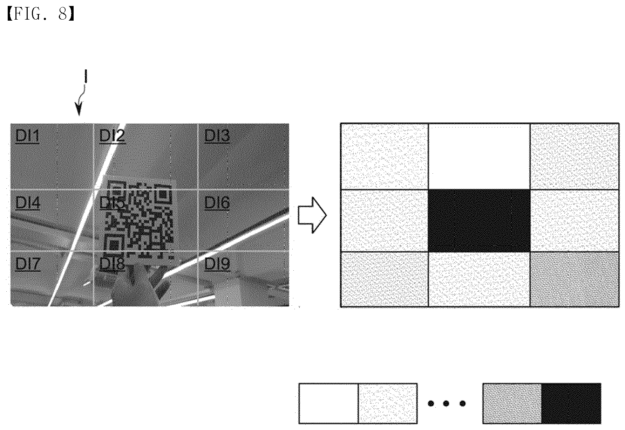

FIG. 8 is an exemplary diagram for explaining a method for calculating a deviation based on an average brightness value for each of a plurality of divided regions according to another embodiment of the present disclosure.

Referring to FIG. 8, in one embodiment, the application 111 may 4) calculate a brightness average value for each of the plurality of divided regions and a deviation between the calculated brightness average values for the respective divided regions (S307).

That is, the application 111 may determine whether there is a mutual deviation in brightness between local regions according to the plurality of divided regions in the identification code image I.

In addition, in one embodiment, application 111 may 5) determine an application threshold priority by comparing the calculated deviation with a predetermined reference value (309).

Here, the application threshold priority according to one embodiment may be information in which the plurality of thresholds, including the high threshold, the intermediate threshold, and/or the low threshold, calculated for the respective divided regions are assigned with orders to be used as applied thresholds for the corresponding divided regions (suitable orders for use as applied thresholds in the embodiment).

Here, the applied threshold according to one embodiment may refer to a threshold value used as a reference for binary thresholding performance for each divided region among the plurality of thresholds including the high threshold, the intermediate threshold, and/or the low threshold.

Specifically, in one embodiment, when the calculated deviation is greater than or equal to the predetermined reference value, the application 111 may determine to which section among the first to N-th brightness sections the brightness average values for the respective divided regions belong the most.

In this case, when the average brightness values for the respective divided regions are included the most in the first brightness section (i.e., the low brightness section), the application 111 may determine the application threshold priority based on the plurality of thresholds including the high threshold, the intermediate threshold, and/or the low threshold for a plurality of divided regions (hereinafter, referred to as "dark grid regions) included in the first brightness section.

Specifically, in one embodiment, the application 111 may calculate an average for the high threshold, the intermediate threshold, and the low threshold for each of the dark grid regions, and calculate a high average threshold, an intermediate average threshold, and a low average threshold for all the dark grid regions.

In addition, in one embodiment, the application 111 may determine the application threshold priority in the order of the low average threshold, the high average threshold, and the intermediate average threshold calculated.

Alternatively, according to one embodiment, the application 111 may calculate an average brightness value for all the dark grid regions.

Then, the application 111 may set the calculated average brightness value as the intermediate average threshold for all the dark grid regions.

In addition, the application 111 may set a threshold value increased by a predetermined brightness based on the intermediate average threshold for the dark grid regions as the high average threshold for all the dark grid regions.

In addition, the application 111 may set a threshold value decreased by the predetermined brightness based on the intermediate average threshold value for the dark grid regions as the low average threshold for all the dark grid regions.

Then, the application 111 may determine the application threshold priority in the order of the low average threshold, the high average threshold, and the intermediate average threshold.

On the other hand, in one embodiment, when the average brightness values of the respective divided regions are included the most in the N-th brightness section (i.e., the high brightness section), the application 111 may determine the application threshold priority based on a plurality of thresholds including the high threshold, the intermediate threshold, and/or the low threshold for a plurality of divided regions (hereinafter, referred to as "bright grid regions) included in the N-th brightness section.

Specifically, in one embodiment, the application 111 may calculate an average for the high threshold, the intermediate average threshold, and the low average threshold for each of the bright grid regions, and calculate a high average threshold, an intermediate average threshold, and a low average threshold for all the bright grid regions.

In addition, in one embodiment, the application 111 may determine the application threshold priority in the order of the high average threshold, the low average threshold, and the intermediate average threshold calculated.

Alternatively, according to one embodiment, the application 111 may calculate an average brightness value for all the bright grid regions.

Then, the application 111 may set the calculated average brightness value as the intermediate average threshold value for all the bright grid regions.

In addition, the application 111 may set a threshold value increased by a predetermined brightness based on the intermediate average threshold for the bright grid regions as the high average threshold for all the bright grid regions.

In addition, the application 111 may set a threshold value decreased by the predetermined brightness based on the intermediate average threshold for the bright grid regions as the low average threshold for all the bright grid regions.

Then, the application 111 may determine the application threshold priority in the order of the high average threshold, the low average threshold, and the intermediate average threshold set as described above.

On the other hand, in one embodiment, when the calculated deviation is less than the predetermined reference value, the application 111 may determine the application threshold priority with the average brightness value of the intermediate thresholds for the plurality of divided regions and/or the average brightness value of all pixels in the identification code image I as the highest priority.

In this case, the application 111 may set the remaining order of the application threshold priority when the deviation is less than the predetermined reference value in the manner described above.

In this way, the application 111 may divide the identification code image I into the plurality of regions, and dynamically determine the binarization reference threshold for the identification code image I in consideration of the brightness deviation between the respective divided regions.

Accordingly, the application 111 can minimize the two-dimensional identification code detection error due to the influence of the local brightness in the identification code image I.

In addition, in one embodiment, the application 111 may 6) generate a binarized image BI for the identification code image I based on the determined application threshold priority (S311).

Specifically, in one embodiment, the application 111 may generate a binarized image BI obtained by binarizing the identification code image I by sequentially using the first to third application thresholds within the determined application threshold priority.

More specifically, based on the first application threshold within the application threshold priority(i.e., the highest priority threshold), the application 111 may perform binary thresholding which converts pixels brighter than the first application threshold among the plurality of pixels included in the identification code image I to white and converts the remaining pixels to black.

In one embodiment, when the identification code image I includes more bright grid regions and the application threshold priority is determined in the order of the high average threshold value, the low average threshold value, and the intermediate average threshold value, the application 111 may binarize the identification code image I based on the high average threshold (i.e., the first application threshold).

In the same way, when the identification code image I includes more dark grid regions and the application threshold priority is determined in the order of the low average threshold value, the high average threshold value, and the intermediate average threshold value, the application 111 may binarize the identification code image I based on the low average threshold (i.e., the first application threshold).

In addition, in one embodiment, the application 111 may determine whether a predetermined fixed pattern exists in the binarized image BI generated based on the first application threshold.

Here, the fixed pattern according to one embodiment may refer to various patterns such as a position marker and/or an alignment marker preset according to a predetermined rule to implement a predetermined two-dimensional identification code.

In this case, based on the second application threshold within the application threshold priority(that is, next-order threshold for the first application threshold), the application 111 may perform binary thresholding which converts pixels brighter than the second application threshold among the plurality of pixels included in the identification code image I to white and converts the remaining pixels to black when the predetermined fixed pattern does not exist in the binarized image BI.

In one embodiment, when the identification code image I includes more bright grid regions and the application threshold priority is determined in the order of the high average threshold value, the low average threshold value, and the intermediate average threshold value, the application 111 may binarize the identification code image I based on the low average threshold (i.e., the second application threshold).

In the same way, when the identification code image I includes more dark grid regions and the application threshold priority is determined in the order of the low average threshold value, the high average threshold value, and the intermediate average threshold value, the application 111 may binarize the identification code image I based on the high average threshold (i.e., the second application threshold).

In addition, in one embodiment, the application 111 may determine whether a predetermined fixed pattern exists in the binarized image BI generated based on the second application threshold.

Then, when the fixed pattern does not exist again, the application 111 may repeat the above-described process by sequentially applying another next-order threshold (the third application threshold in the embodiment) within the application threshold priority.

In this way, the application 111 may repeat the process of sequentially applying and evaluating a plurality of binarization reference thresholds BT set in consideration of the brightness state in the corresponding identification code image I according to priority.

Therefore, the application 111 may sequentially apply the plurality of binarization reference thresholds BT that are dynamically determined according to the brightness state of the identification code image I according to a systematic and reasonable process.

Then, the application 111 may convert the identification code image I into a binarized image BI based on the threshold value with the best quality of the application result.

That is, in one embodiment, the application 111 may convert the identification code image I into a high-quality binarized image BI by generating a binarized image BI for the identification code image I based on the application threshold priority determined as described above.

Meanwhile, in another embodiment, the application 111 may acquire a plurality of identification code images I obtained with different attributes depending on the type of the image sensor 161 that photographed the two-dimensional identification code.

In one embodiment, the application 111 may acquire a first identification code image obtained by photographing a two-dimensional identification code through a standard lens having a first lens value (e.g., an F value, an NA value, and/or an aperture value).

In addition, the application 111 may acquire a second identification code image obtained by photographing a two-dimensional identification code through a wide-angle lens having a second lens value.

Further, the application 111 may acquire a third identification code image obtained by photographing a two-dimensional identification code through a telephoto lens having a third lens value.

Then, the application 111 may execute the above-described dynamic image threshold setting process based on the acquired first identification code image.

In this case, the application 111 may compare the brightness value of the dark grid region or the bright grid region (hereinafter, referred to as the target grid region) detected from the first identification code image with a predetermined first threshold value.

In addition, when the brightness value of the target grid region is determined to be equal to or greater than the first threshold or equal to or less than the first threshold as a result of the comparison, the application 111 may determine the target grid region as the original grid region.

In addition, the application 111 may detect a region corresponding to the determined original grid region from the second or third identification code image.

In addition, the application 111 may correct the detected corresponding region (hereinafter, referred to as the corresponding grid region) based on the first lens value of the standard lens obtained by photographing the first identification code image.

For example, the application 111 may correct the corresponding grid region based on the first lens value so that the scale and/or tilting properties of the image in the corresponding grid region have a similarity equal to or greater than a predetermined reference to the scale and/or tilting properties of the image in the original grid region.

In addition, the application 111 may replace the original grid region in the first identification code image with the corrected corresponding grid region.

In addition, the application 111 may execute the above-described dynamic image threshold setting process based on the first identification code image including the corrected corresponding grid region.

That is, the application 111 may convert the first identification code image including the corrected corresponding grid region into the binarized image BI.

Accordingly, when there is a region having a quality below the predetermined reference in the identification code image I photographed using the first lens, the application 111 according to the present embodiment can further improve the quality of the binarized image BI obtained based on the identification code image I photographed through the first lens by supplementing the region with an identification code image I photographed using another lens.

In one embodiment, the application 111 may detect a two-dimensional identification code in the converted binarized image BI.

Specifically, in one embodiment, the application 111 may detect a two-dimensional identification code in the binarized image BI based on the binarized image BI generated as described above.

More specifically, in one embodiment, the application 111 may detect a predetermined fixed pattern in the binarized image BI.

In addition, in one embodiment, the application 111 may detect a two-dimensional identification code in the binarized image BI based on the detected fixed pattern.

In this case, according to one embodiment, when the fixed pattern detection rate is less than a predetermined reference, the application 111 may set an additional reference threshold based on the application threshold.

That is, the application 111 may set at least one additional application threshold value calculated for the identification code image I as the additional reference threshold, the at least one additional application threshold value having a threshold value increased or decreased by a predetermined brightness based on the application threshold for the identification code image I.

In addition, in one embodiment, the application 111 may binarize the identification code image I based on the set additional reference threshold to generate a binarized image BI.

Then, the application 111 may detect a two-dimensional identification code by detecting a predetermined fixed pattern in the generated binarized image BI.

Accordingly, the application 111 can dynamically set the application threshold for the corresponding identification code image I in a more diversified manner, thereby improving the hit rate for the optimal application threshold for binarization.

In addition, in one embodiment, the application 111 may provide the detected two-dimensional identification code information.

Specifically, in one embodiment, the application 111 may recognize the detected two-dimensional identification code to obtain information stored in the two-dimensional identification code (e.g., a website address, virtual object, and/or authentication information).

In addition, in one embodiment, the application 111 may provide the acquired two-dimensional identification code information in various ways according to a predetermined manner (e.g., display output, data communication, and/or application service).

In addition, in one embodiment, the application 111 may perform an application service based on the provided two-dimensional identification code information.

Then, in one embodiment, the application 111 may perform various application services executed based on the provided two-dimensional identification code information.

Specifically, in one embodiment, the application 111 may perform various application services based on the two-dimensional identification code information in conjunction with other applications operating on the terminal and/or external computing devices (e.g., other terminals and/or servers).

In one embodiment, the application 111 may provide the two-dimensional identification code information to other applications and/or external applications.

The other applications and/or external applications that received the two-dimensional identification code information may perform a series of functions for various application services, including image-based two-dimensional identification code recognition and/or processing services (e.g., accessing website addresses in two-dimensional identification code information, displaying virtual objects, or executing authentication processes) based on the received two-dimensional identification code information.

Thus, the application 111 can perform various application services based on the two-dimensional identification code information through interworking with other applications and/or external applications.

Accordingly, the application 111 can support implementing various application services of higher quality based on the more accurately detected two-dimensional identification code.

In the above, for effective description, the embodiments have been described separately as described above, but according to the embodiments, at least some of the embodiments may be organically coupled to each other.

In the method and system of setting a dynamic image threshold for two-dimensional identification code detection according to the embodiment of the present disclosure, by dynamically determining a binarization reference threshold BT for two-dimensional identification code detection based on the brightness value in the image, regardless of whether the brightness in the image changes dynamically or a noise (e.g., local brightness value, etc.) occurs according to changes in environmental factors (e.g., lighting conditions, etc.), it is possible to determine a reference threshold that supports binary thresholding which accurately discriminates the two-dimensional identification code in the corresponding image.

Further, in the method and system of setting a dynamic image threshold for two-dimensional identification code detection according to the embodiment of the present disclosure, by calculating a plurality of dynamically determined binarization reference thresholds BT (i.e., adaptive thresholds), it is possible to acquire diversified binarized images BI based on the plurality of adaptive thresholds, and by performing two-dimensional identification code detection based on a binarized image BI with the highest detection rate among the acquired binarized images, it is possible to improve the detection accuracy and performance of two-dimensional identification code detection even when there is a noise that interferes with the detection of two-dimensional identification code.

In addition, in the method and system of setting a dynamic image threshold for two-dimensional identification code detection according to the embodiment of the present disclosure, by assigning priorities to the plurality of calculated adaptive thresholds and applying thresholds sequentially according to the assigned priorities, the two-dimensional identification code in the image can be detected according to a systematic and rational process based on the plurality of adaptive thresholds, which improves the detection accuracy and reliability.

Meanwhile, the embodiments according to the present disclosure described above may be implemented in the form of program instructions that may be executed through various computer components to be recorded on a computer-readable recording medium. The computer-readable recording medium may include program instructions, data files, data structures, etc. alone or in combination thereof. The program instructions recorded on the computer-readable recording medium may be specifically designed and configured for the present disclosure or may be known to or usable by those skilled in the art of computer software. Examples of the computer-readable recording medium include magnetic mediums such as hard disks, floppy disks and magnetic tapes, optical recording medium such as CD-ROM and DVD, magnetic-optical medium such as floppy disks, and hardware devices specifically configured to store and execute program instructions such as ROM, RAM, and flash memory. Examples of the program instructions include not only machine language codes, such as those created by compilers, but also advanced language codes that can be executed by computers using interpreters or the like. The hardware device may be changed to one or more software modules to perform processing according to the present disclosure, and vice versa.

The specific embodiments described in the present disclosure are embodiments and do not limit the scope of the present disclosure in any way. For simplicity of the specification, description of conventional electronic configurations, control systems, software, and other functional aspects of the systems may be omitted. In addition, the connection members or connections of lines between the components shown in the drawings are illustrative of functional connections and/or physical or circuit connections, and may be represented as alternative or additional various functional connections, physical connections, or circuit connections. In addition, when there is no specific mention, such as "essential" or "important," it may not be an essential component for the application of the present disclosure.

The detailed description of the present disclosure has been described with reference to the preferred embodiments of the present disclosure, but it can be understood by those skilled in the art or those of ordinary skill in the art that the present disclosure can be modified and changed without departing from the spirit and technology range of the present disclosure described in the claims below. Therefore, the technical scope of the present disclosure is not limited to the contents described in the detailed description of the specification, but should be determined by the claims.

## Claims

1. A method of setting a dynamic image threshold for two-dimensional identification code detection by a threshold setting application executed by at least one processor of a terminal, the method comprising:
acquiring an identification code image obtained by photographing a two-dimensional identification code;
converting the acquired identification code image into a binarized image;
detecting a two-dimensional identification code in the converted binarized image; and
providing a predetermined application service based on the detected two-dimensional identification code,
wherein the converting of the identification code image into a binarized image includes:
dividing the identification code image into a plurality of regions;
calculating a binarization reference threshold for each of the plurality of divided regions;
performing binary thresholding on each of the plurality of divided regions based on the calculated binarization reference threshold;
generating a plurality of binarized divided images based on the performed binary thresholding; and
generating the binarized image by combining the plurality of generated binarized divided images.

2. The method of claim 1, wherein
the binarized image is an image obtained by performing binary thresholding of converting pixels brighter than the binarization reference threshold value to white among a plurality of pixels included in the identification code image and converting the remaining pixels to black.

3. The method of claims 1 or 2, wherein
the calculating of a binarization reference threshold for each of the plurality of divided regions includes:
calculating an average brightness value of pixels included in a first region within the plurality of divided regions; and
determining the calculated average brightness value as the binarization reference threshold for the first regions.

4. The method of any one of the preceding claims, wherein
the detecting of a two-dimensional identification code in the converted binarized image includes determining whether a predetermined fixed pattern exists in the binarized image, and
the converting of the acquired identification code image into a binarized image includes calculating an additional reference threshold for each of the plurality of divided regions based on the binarization reference threshold of each of the plurality of divided regions when the fixed pattern does not exist in the binarized image.

5. The method of any one of the preceding claims, wherein
the additional reference threshold is at least one binarization reference threshold additionally calculated for the first region within the plurality of divided regions in addition to the binarization reference threshold for the first region, and
the additional reference threshold has a threshold value increased or decreased by a predetermined value based on the binarization reference threshold for the first region within the plurality of divided regions.

6. The method of any one of the preceding claims, wherein
the converting of the acquired identification code image into a binarized image further includes:
performing binary thresholding on each of the plurality of divided regions based on the calculated additional reference threshold;
generating a plurality of additional binarized divided images based on the performed binarization; and
generating a plurality of estimated binarized images by combining the plurality of generated additional binarized divided images and the plurality of generated binarized divided images according to a predetermined method.

7. The method of any one of the preceding claims, wherein
the detecting of a two-dimensional identification code in the converted binarized image further includes:
determining whether the generated plurality of estimated binarized images include the predetermined fixed pattern; and
detecting the two-dimensional identification code based on the estimated binarized image including the fixed pattern.

8. A method of setting a dynamic image threshold for two-dimensional identification code detection by a threshold setting application executed by at least one processor of a terminal, the method comprising:
acquiring an identification code image obtained by photographing a two-dimensional identification code;
converting the acquired identification code image into a binarized image;
detecting a two-dimensional identification code in the converted binarized image; and
providing a predetermined application service based on the detected two-dimensional identification code,
wherein the converting of the identification code image into a binarized image includes:
dividing the identification code image into a plurality of regions;
calculating an average brightness value for each of the plurality of divided regions;
calculating a deviation between the plurality of calculated average brightness values;
determining whether average brightness values for the plurality of divided regions are more included in a first brightness section and a second brightness section, when the calculated deviation is equal to or greater than a predetermined criterion;
determining different binarization reference thresholds and application priority depending on the determination result;
performing binary thresholding on the identification code image based on the determined binarization reference threshold and application priority; and
generating the binarized image based on the performed binary thresholding.

9. The method of claim 8, wherein
the generating of the binarized image BI includes:
applying the binarization reference threshold to the binary thresholding of the identification code image according to the application priority; and
converting a pixel brighter than the applied binarization reference threshold among a plurality of pixels included in the identification code image to white, and converting the remaining pixels to black.

10. A system for setting a dynamic image threshold for two-dimensional identification code detection, the system comprising:
at least one display for outputting a two-dimensional identification code;
at least one memory;
at least one processor; and
at least one application stored in the memory and executed by the processor to set a dynamic image threshold for two-dimensional identification code detection,
wherein the at least one application operates to:
acquire an identification code image obtained by photographing a two-dimensional identification code;
convert the acquired identification code image into a binarized image;
detect a two-dimensional identification code in the converted binarized image; and
provide a predetermined application service based on the detected two-dimensional identification code;
divide the identification code image into a plurality of regions;
calculate a binarization reference threshold for each of the plurality of divided regions;
perform binary thresholding on each of the plurality of divided regions based on the calculated binarization reference threshold;
generate a plurality of binarized divided images based on the performed binary thresholding; and
generate the binarized image by combining the plurality of generated binarized divided images.
